(19)

Europäisches
Patentamt
European
Patent Office
Office européen
des brevets

(11) **EP 2 213 999 A1**

(12) **EUROPEAN PATENT APPLICATION**

(43) Date of publication:
**04.08.2010 Bulletin 2010/31**

(51) Int Cl.:
**G01N 21/27** (2006.01)  **G01N 23/06** (2006.01)
**G01N 33/02** (2006.01)

(21) Application number: **10000546.1**

(22) Date of filing: **20.01.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **29.01.2009 JP 2009018642**

(71) Applicant: **Satake Corporation
Chiyoda-ku,
Tokyo 101-0021 (JP)**

(72) Inventors:
• **Ishizuki, Hiroki
 Tokyo 101-0021 (JP)**
• **Sakamoto, Hisashi
 Tokyo 101-0021 (JP)**

(74) Representative: **Schmid, Nils T.F.
Forrester & Boehmert
Pettenkoferstrasse 20-22
80366 München (DE)**

(54) **Calculation method for absorbance via spectroscopic analysis apparatus**

(57)  To provide a method which is aimed at correcting a machinery difference, that is capable of determining absorbance at the same wavelength in the respective apparatuses even in the case in which there is drift between measurement wavelengths between respective spectroscopic analysis apparatuses due to an individual difference in spectroscopes mounted thereon. Technical means for irradiating a light including a plurality of wavelengths onto an object to be measured, receiving a reflected light or a transmitted light from the object to be measured, determining absorbances at a plurality of wavelengths on the basis of information obtained by receiving the light, determining a second- or higher-order regression formula with the wavelengths of the light as explanatory variables and the absorbances as objective variables by use of the plurality of absorbances, and calculating absorbance at a specified wavelength by substituting a value of the specified wavelength for the regression formula. Further, it is also possible to calculate derivative absorbance at a specified wavelength by differentiating the regression formula and substituting a value of the specified wavelength for the differentiated regression formula.

Fig.2

Approximation formula 1

$$f(\lambda) = a \cdot X^2 + b \cdot X + c$$

Absorbance

Wavelength (nm)

Approximation formula of absorbances in spectroscope 14

EP 2 213 999 A1

**Description**

[Technical Field]

The present invention relates to a method in which an approximation formula of absorbances is determined by use of information on absorbances measured for determination, and absorbance at a specified wavelength is calculated on the basis of the approximation formula, and to a technology capable of calculating absorbance at a specified wavelength common among a plurality of spectroscopic analysis apparatuses thereby.

[Background Art]

Conventionally, components of objects to be measured such as grains have been non-destructively measured by spectroscopic analysis. The measurement is performed such that information on absorbance obtained from a transmitted light or a reflected light of an object to be measured is applied to a calibration curve prepared in advance.

The calibration curve is prepared by use of absorbances or derivative absorbances. For example, in Patent Document 1, there is described that derivative absorbances are determined on the basis of absorbances and a calibration curve is prepared by use of the derivative absorbances. Here, with respect to the use of derivative absorbances, in Non-Patent Document 1 (Abstract of Speech from the 18th Symposium on Non-Destructive Evaluation Techniques), there is described that an accuracy of measurement of a calibration curve is improved. In accordance with the Non-Patent Document 1, derivative absorbance is obtained by derivative approximation with a difference in wavelength differences of absorbance spectra serving as discrete data.

Meanwhile, a calibration curve prepared by use of absorbances or derivative absorbances is preferably prepared for each of spectroscopic analysis apparatuses. However, it is necessary to install a common calibration curve in the apparatuses which have the same structure or which are the same products in terms of production cost. Therefore, under the current circumstances, at least one apparatus is set as a standard device, and a calibration curve is prepared by PLS analysis or the like on the basis of information on the absorbances measured to be obtained by the standard device, and the calibration curve is installed in another apparatus (a sub device) which has the same structure or which is the same product as the standard device.

At that time, an error for measuring a component of an object to be measured called a machinery difference is caused between the respective apparatuses due to an individual difference in spectroscopes mounted on the respective apparatuses. In the spectroscopes, there is a wavelength drift measured as an individual difference. Then, it is thought that a machinery difference between the respective apparatuses is caused mainly by such drift between measurement wavelengths. That is, provided that a calibration curve prepared on the basis of a wavelength measured by the standard device is installed in a sub device in which there is drift in a wavelength to be measured from that of the standard device, a machinery difference is caused between the sub device and the standard device by the drift.

[Citation List]

[Patent Literature]

[PTL 1] Japanese Published Unexamined Patent Application No. 5-60688

[Non Patent Literature]

[NPL 1] "Near-Infrared Spectral Analysis," Japanese Society for Food Science and Technology - Abstract of Speech from the 18th Symposium on Non-Destructive Evaluation Techniques, 2002, page 21

[Summary of Invention]

[Technical Problem]

Then, an object of the present invention is to provide a method which is aimed at correcting the machinery difference, that is capable of determining absorbance at the same wavelength in the respective apparatuses even in the case in which there is drift between measurement wavelengths between respective spectroscopic analysis apparatuses due to an individual difference in spectroscopes mounted thereon.

[Solution to Problem]

In order to achieve the above-described object, the present invention takes technical means for irradiating a light including a plurality of wavelengths onto an object to be measured, receiving a reflected light or a transmitted light from the object to be measured, determining absorbances at a plurality of wavelengths on the basis of information obtained by receiving the light, determining a second- or higher-order regression formula with the wavelengths of the light as explanatory variables and the absorbances as objective variables by use of the plurality of absorbances, and calculating absorbance at a specified wavelength by substituting a value of the specified wavelength for the regression formula.

Further, the present invention takes technical means for differentiating the regression formula, and calculating derivative absorbance at a specified wavelength by substituting a value of the specified wavelength for the differentiated regression formula.

Moreover, the present invention takes technical means for, among a plurality of spectroscopic analysis apparatuses which have the same structure or which are the same products, setting at least one of the spectroscopic analysis apparatuses as a standard device, determining absorbances at a plurality of specified wavelengths in the calculation method of the present invention by the standard device, preparing a calibration curve by use of the absorbances, and when the calibration curve is installed in one of the spectroscopic analysis apparatuses other than the standard device, and at the time of calculating a specified component of an object to be measured with the calibration curve on the basis of information on the absorbances measured to obtain by the other spectroscopic analysis apparatus, determining absorbances at the specified wavelengths in the calculation method for absorbance of the present invention by the other spectroscopic analysis apparatus as well, to use the absorbances.

In addition, the present invention takes technical means for, among a plurality of spectroscopic analysis apparatuses which have the same structure or which are the same products, setting at least one of the spectroscopic analysis apparatuses as a standard device, determining derivative absorbances at a plurality of specified wavelengths in the calculation method according to the present invention by the standard device, preparing a calibration curve by use of the derivative absorbances, and when the calibration curve is installed in one of the spectroscopic analysis apparatuses other than the standard device, and at the time of calculating a specified component of an object to be measured with the calibration curve on the basis of information on the derivative absorbances measured to obtain by the other spectroscopic analysis apparatus, determining derivative absorbances at the specified wavelengths in the calculation method for derivative absorbance according to the present invention by the other spectroscopic analysis apparatus as well, to use the derivative absorbances.

[Advantageous Effects of Invention]

In accordance with the present invention, even in the case in which there is drift (a difference) between wavelengths to be measured due to an individual difference in spectroscopes respectively mounted on respective spectroscopic analysis apparatuses which have the same structure or which are the same products, it is possible to determine absorbance at the same measurement wavelength in the respective spectroscopic analysis apparatuses in the calculation method for absorbance of the present invention.

Therefore, provided that a calibration curve prepared by a single standard device is installed in the other one of the respective spectroscopic analysis apparatuses, it is possible to eliminate a machinery difference due to drift between wavelengths to be measured, and so-called relocatability of the calibration curve is improved.

Accordingly, there is no need to respectively prepare calibration curves for the respective spectroscopic analysis apparatuses, and thus it is possible to greatly improve the production efficiency.

[Brief Description of Drawings]

Fig. 1 schematically shows a configuration of a spectroscopic analysis apparatus.
Fig. 2 shows an approximation formula of absorbances in a spectroscope.
Fig. 3 shows a relationship between the chemical analytical values of protein content ratios and the calculated values of protein content ratios calculated by utilizing derivative absorbances determined in a conventional method.
Fig. 4 shows a relationship between the chemical analytical values of protein content ratios and the calculated values of protein content ratios calculated by utilizing derivative absorbances determined in a method of the present invention.

[Description of Embodiments]

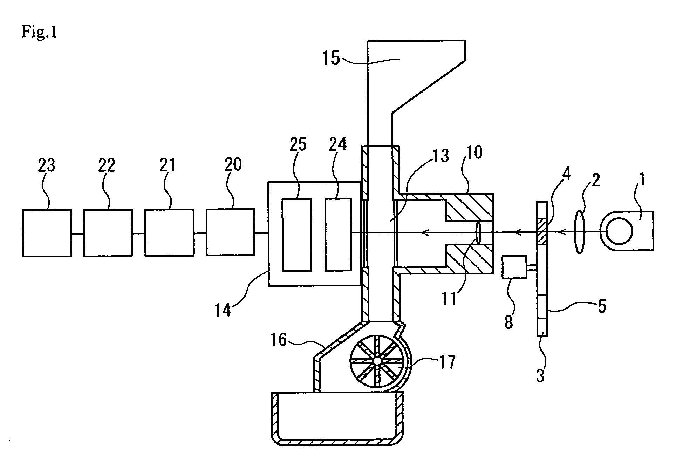

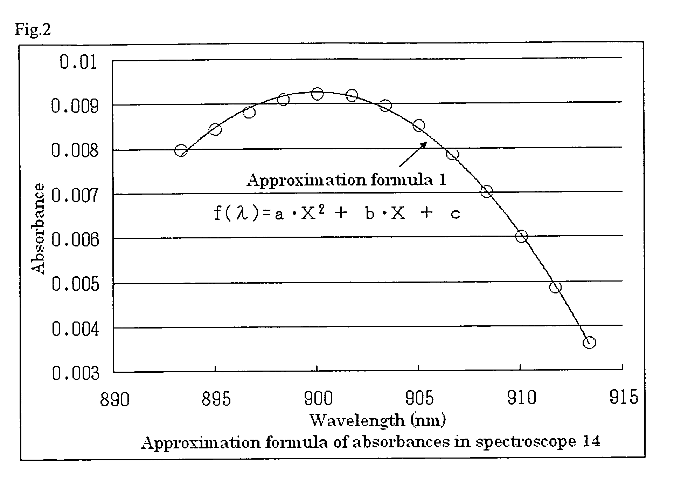

An embodiment for carrying out the present invention will be described with reference to Fig. 1 and Fig. 2. Fig. 1 schematically shows a configuration of a spectroscopic analysis apparatus 6 for measuring absorbance of an object to be measured. Note that, as the spectroscopic analysis apparatus 6, any spectroscopic analysis apparatus generally available on the market which receives a reflected light or a transmitted light from an object to be measured, and is capable of determining absorbance by use of the received reflected light or transmitted light can be used.

In Fig. 1, reference numeral 1 denotes a light source such as a halogen lamp or the like that irradiates a specimen serving as an object to be measured with a light including a visible light, a near-infrared light, or the like, reference numeral 2 denotes a condensing lens, and reference numeral 3 denotes a circular disc including an ND filter 4 that decreases a quantity of light from the light source 1, a cut filter 5 that cuts light at unnecessary wavelengths, and the like. The ND filter 4, the cut filter 5, and the like included in the circular disc 3 are disposed so as to be on the optical axis of the lens 2, and are rotated to an appropriate position at the time of measurement by driving of a driving motor 8. Reference numeral 10 denotes a tubular body through which a light from the light source 1 is guided up to a specimen measuring section 13, and a diffusing lens 11 is provided in the tubular body 10. Then, the specimen measuring section 13 and a spectroscope 14 are provided at an end of the tubular body 10, and the spectroscope 14 is arranged so as to take in a transmitted light passing through the specimen measuring section 13 to transmit through a specimen.

In order to continuously perform supply and discharge of specimens, and to uniform the density of specimens inside the specimen measuring section 13, it is preferable that a specimen supplying section 15 and a specimen discharging section 16 are respectively disposed in the upper portion and the lower portion of the specimen measuring section 13. It is recommended that, for example, the specimen supplying section 15 be formed into a hopper shape in order to retain specimens, and the specimen discharging section 16 be equipped with a discharge valve 17.

An amplifier 20 that amplifies a signal, an A/D converter 21 that performs A/D conversion, and an arithmetic operation unit 22 composed of a microcomputer and the like are connected at the subsequent stage of the spectroscope 14. This arithmetic operation unit 22 performs an arithmetic operation of absorbances at a plurality of wavelengths relating to a contained component of the measurement specimen on the basis of a transmitted light of a measurement specimen received by the spectroscope 14, and determines first derivative absorbances or second derivative absorbances on the basis of the absorbances, and substitutes those derivative absorbances for a calibration curve (component calculating formula) prepared in advance to calculate specified component values such as protein content ratios or the like of the measurement specimen. The specified component value determined by the arithmetic operation unit 22 is displayed on a display 23 composed of a liquid crystal display or the like.

The spectroscope 14 is provided with a diffraction grating 24 for dispersing a light to be received into light of respective wavelengths and a light receiving section 25 that receives a light dispersed by the diffraction grating 24 at each wavelength. The light receiving section 25 is composed of a plurality of light receiving elements called pixels. In the present example, lights dispersed by use of a spectroscope (C11010MA) manufactured by HAMAMATSU PHOTONICS K.K. are received by the 256 light receiving elements thereof.

In the actual measurement, lights in a wavelength range from 600 nm to 1050 nm are received, which means that the lights in the wavelength range from 600 nm to 1050 nm are measured at substantially regular intervals by the 256 light receiving elements. That is, the light at a wavelength of 600 nm is received by the 1st light receiving element and the light at a wavelength of 1050 nm is received by the 256th light receiving element.

Table 1 shows absorbances at approximately 904 nm measured by the spectroscope 14, and measurement wavelengths by the respective light receiving elements and the absorbances at the measurement wavelengths are shown therein. Note that absorbances A are values calculated on the basis of transmitted lights.

[Table 1]

| Pixel No. (nm) | Measurement wavelength | Absorbance A |
|---|---|---|
| 145 | 893.34 | 0.00797 |
| 146 | 895.02 | 0.00844 |
| 147 | 896.69 | 0.00883 |
| 148 | 898.37 | 0.00910 |
| 149 | 900.04 | 0.00923 |
| 150 | 901.71 | 0.00919 |
| 151 | 903.38 | 0.00896 |

(continued)

| Pixel No. (nm) | Measurement wavelength | Absorbance A |
|---|---|---|
| 152 | 905.05 | 0.00851 |
| 153 | 906.71 | 0.00786 |
| 154 | 908.37 | 0.00702 |
| 155 | 910.03 | 0.00601 |
| 156 | 911.69 | 0.00486 |
| 157 | 913.34 | 0.00361 |

As shown in Table 1, in the spectroscope 14, a wavelength to be measured is set for each pixel (light receiving element). Therefore, it is not always possible to receive a light at a specified wavelength necessary for calculating a specified component containing value in an object to be measured, and a light at a wavelength approximate to the light at the specified wavelength is substituted for it in many cases. For example, in the case in which the specified wavelength is 904 nm, it is theoretically necessary to determine the absorbance of a light at a wavelength of 904 nm. However, in the spectroscope 14, a light at a wavelength approximate to 904 mm which is measured by the 151st (903.38 nm) pixel or the 152nd (905.05 nm) pixel is to be used.

Derivative absorbances are determined by the method described in Non-Patent Document 1. Here, by determining a difference in absorbances determined by receiving lights by the 151st (903.38 nm) pixel and the 152nd (905.05 nm) pixel, it is possible to determine the derivative absorbance at 904 nm.

Note that, even the derivative absorbance determined in this way does not cause any problem in any case where a calibration curve is prepared on the basis of values measured by the spectroscopic analysis apparatus 6, and the calibration curve is used only in the spectroscopic analysis apparatus 6.

Meanwhile, Table 2 shows absorbances at approximately 904 nm which are measured by another spectroscopic analysis apparatus 6B which is the same product as the spectroscopic analysis apparatus 6, in which another spectroscope 14B which is the same product as the spectroscope 14 is mounted, and measurement wavelengths by the respective light receiving elements, the absorbances at the measurement wavelengths, and differences (nm) between the measurement wavelengths by the spectroscope 14 and the spectroscope 14B are shown therein. Note that absorbances B are values calculated on the basis of transmitted lights.

[Table 2]

| Pixel No. | Measurement wavelength (nm) | Absorbance B | Difference between the measurement wavelengths by spectroscope 14 and spectroscope 14B (nm) |
|---|---|---|---|
| 145 | 892.87 | 0.00784 | 0.47 |
| 146 | 894.57 | 0.00834 | 0.45 |
| 147 | 896.27 | 0.00875 | 0.42 |
| 148 | 897.97 | 0.00905 | 0.40 |
| 149 | 899.66 | 0.00922 | 0.38 |
| 150 | 901.36 | 0.00922 | 0.36 |
| 151 | 903.05 | 0.00902 | 0.34 |
| 152 | 904.73 | 0.00861 | 0.31 |
| 153 | 906.42 | 0.00798 | 0.29 |
| 154 | 908.10 | 0.00713 | 0.27 |
| 155 | 909.78 | 0.00611 | 0.25 |
| 156 | 911.46 | 0.00493 | 0.22 |
| 157 | 913.14 | 0.00366 | 0.20 |

As is clear by comparing Table 1 with Table 2, it can be understood that although the spectroscopic analysis apparatus 6 and the other spectroscopic analysis apparatus 6B are the same products, their measurement wavelengths are not the same. This is because of an individual difference between the spectroscope 14 and the other spectroscope 14B.

Therefore, even in the spectroscopic analysis apparatuses which are the same products, there is drift (a difference) between wavelengths of a light to be measured due to an individual difference in the spectroscopes mounted on the respective spectroscopic analysis apparatuses. Under the effect of the drift between measurement wavelengths, in the case in which a calibration curve prepared by use of absorbances determined by use of the spectroscopic analysis apparatus 6 is installed in the other spectroscopic analysis apparatus 6B, even when the same specimen is measured by the spectroscopic analysis apparatus 6 and the other spectroscopic analysis apparatus 6B, a difference called a machinery difference is caused between the measured values of a component of each object to be measured by the spectroscopic analysis apparatus 6 and the other spectroscopic analysis apparatus 6B.

Then, in the present invention, in order to eliminate the machinery difference, even in the case in which there is drift between wavelengths of a light to be received because there is an individual difference in the spectroscopes mounted thereon, in order to calculate absorbance at the same wavelength by the respective spectroscopic analysis apparatuses at the point in time of calculating absorbance (in particular, derivative absorbance) at a wavelength necessary for measurement of a component of an object to be measured, the following calculation method is carried out.

Here, the case in which derivative absorbance at a wavelength of 904 nm is determined will be described. First, as shown in Table 1, a plurality of absorbances at approximately 904 nm are determined by the respective spectroscopic analysis apparatuses. These absorbances are not necessarily at wavelengths at regular intervals. Next, by use of the plurality of absorbances, as shown in Fig. 2, approximation formula 1 (Formula 1) is determined. This approximation formula 1 can be determined by calculating a second-order regression formula in a general analytical technique with the wavelengths as explanatory variables and the absorbances as objective variables.

## [Formula 1]

$$f(\lambda) = a \cdot X^2 + b \cdot X + c$$

Where a, b, and c are constants.

By substituting 904 for the approximation formula 1, it is possible to calculate the absorbance at a wavelength of 904 nm. Note that, with respect to the number of absorbances used at the time of determining the approximation formula 1, it may be preferable that only absorbances at wavelengths approximate to a specified wavelength necessary for measurement are used in large numbers. In practice, it is recommended that absorbances from the short wavelength side and the long wavelength side of the specified wavelength be evenly used centering on the specified wavelength. It is recommended that preferably 5 to 21 absorbances, more preferably 7 to 17 absorbances, and yet more preferably 9 to 15 absorbances at the specified wavelength, and on the short wavelength side and the long wavelength side of the specified wavelength be used. In the present example, the approximation formula is determined by use of 13 absorbances in total of the absorbance most approximate to the specified wavelength (904 nm), and respectively 6 absorbances from the short wavelength side and the long wavelength side of the specified wavelength.

Further, the aforementioned approximation formula 1 is differentiated to determine the following approximation formula 2;

## [Formula 2]

$$f'(\lambda) = 2a \cdot X + b,$$

and by substituting 904 for the approximation formula 2, it is possible to easily calculate the first derivative absorbance at a wavelength of 904 nm.

The aforementioned approximation formula 1 or approximation formula 2 is determined respectively in the respective spectroscopic analysis apparatuses, and by use of the approximation formula 1 or the approximation formula 2, it is possible to calculate absorbance or derivative absorbance at the same wavelength (specified wavelength) in the respective spectroscopic analysis apparatuses. For example, in the case in which the absorbance at a wavelength of 904 nm is necessary, by substituting 904 for the approximation formula 1 respectively determined in the respective spectroscopic analysis apparatuses, it is possible to calculate the absorbance at a wavelength of 904 nm in all the spectroscopic analysis apparatuses.

Note that it is recommended that the aforementioned approximation formula 1 or approximation formula 2 be determined at each specified wavelength necessary for measurement, and absorbance or derivative absorbance be each determined at the specified wavelength.

Further, the approximation formula 2 is again differentiated, to determine the following formula 3, which makes it possible to calculate second derivative absorbance.

[Formula 3]

$$f'(\lambda) = 2a$$

Note that, in the case in which second or higher derivative absorbance is determined, it is preferable to determine an approximation formula by a third- or higher-order regression formula. Here, the approximation formula by the second-order regression formula has been described. However, the degree of the regression formula is not limited to the second order, and it suffices to determine an approximation formula by a first-, second-, or higher-order regression formula.

[Example]

An example in which the aforementioned machinery difference was actually reduced in the calculation method for absorbance of the present invention will be shown. In this example, the advantage was confirmed such that, with the spectroscopic analysis apparatus 6 as a standard device, a calibration curve is prepared by use of absorbances determined by the standard device, the calibration curve is installed in the other spectroscopic analysis apparatus 6B, and a sample other than a sample (specimen) used for preparing the calibration curve is measured by the spectroscopic analysis apparatus 6B.

In detail, first, 48 samples (hereinafter called "sample A") were measured by the spectroscopic analysis apparatus 6 serving as a standard device. Brown rice (hulled rice) which is a grain was used as a sample A, and 24 grains of domestic(Japan) rice produced in 2005 and 24 grains of domestic(Japan) rice produced in 2006 were used as the brown rice. Calibration curves were prepared by PLS analysis with first derivative absorbances obtained by measuring the sample A as explanatory variables and protein content ratios (chemical analytical values) of the hulled rice as objective variables.

Note that the two calibration curves were prepared, and as one of them, a calibration curve (hereinafter called "calibration curve A") was prepared with a difference in absorbances determined on the basis of output signals from the light receiving elements (CMOS linear image sensors) of the spectroscopes as first derivative absorbances. Further, as the other one, a calibration curve (hereinafter called "calibration curve B") was prepared on the basis of first derivative absorbances determined in the calculation method of the present invention using the approximation formula.

Next, in the other spectroscopic analysis apparatus 6B, 48 samples (hereinafter called "sample B") other than the sample A measured at the time of preparing the calibration curves A and B were measured. Note that, brown rice which is a grain was also used as a sample B, and 24 grains of domestic(Japan) rice produced in 2005 and 24 grains of domestic(Japan) rice produced in 2006 were used as the brown rice.

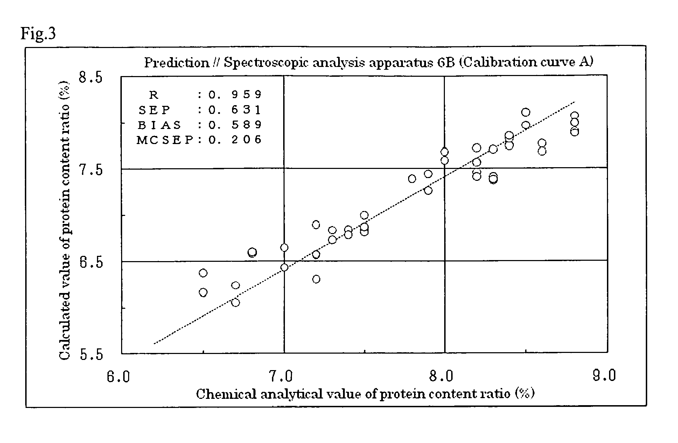

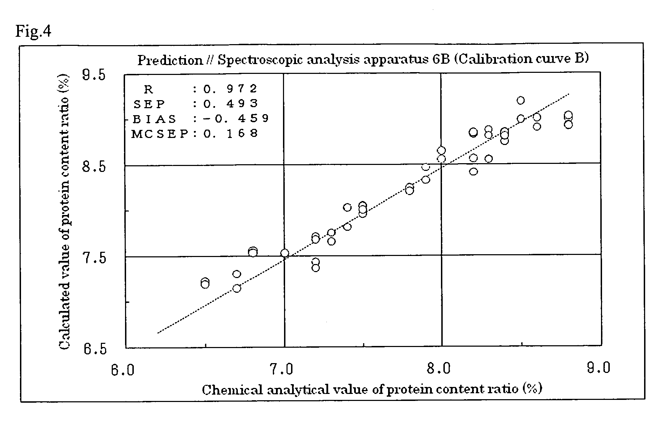

The results of the aforementioned measurements are shown in Figs. 3 to 4. Fig. 3 is measurement results with the calibration curve A by the other spectroscopic analysis apparatus 6B. The first derivative absorbances determined in the method described in Non-Patent Document 1 were substituted for the calibration curve A, to determine calculated values of protein content ratios of the brown rice. Then, Fig. 4 is measurement results with the calibration curve B by the other spectroscopic analysis apparatus 6B. The first derivative absorbances determined in the method using the approximation formula of the present invention were substituted for the calibration curve B, to determine calculated values of protein content ratios.

As shown in Fig. 3, a standard error of prediction (SEP) in the case in which the protein content ratios of the brown rice were calculated by use of the derivative absorbances determined in the conventional method was 0.631. In contrast thereto, a standard error of prediction (SEP) in the case in which the protein content ratios were calculated by use of the derivative absorbances determined in the method of the present invention was 0.493. Therefore, it was possible to reduce a standard error by use of the calculation method for absorbance of the present invention.

That is, it is possible to reduce a machinery difference between the apparatuses caused by an individual difference (drift between measurement wavelengths) in the spectroscopes mounted on the respective spectroscopic analysis apparatuses, by the calculation method for absorbance of the present invention.

[Industrial Applicability]

In the present invention, the example in the case in which a component of a grain such as rice is measured has been shown. The object to be measured is not necessarily limited to a grain, and in the case in which analysis or diagnosis is performed by use of absorbances, the present invention is applicable.

Reference Signs List

1    Light source
2    Lens
3    Circular disc
4    ND filter
5    Cut filter
6    Spectroscopic analysis apparatus
8    Driving motor
10   Tubular body
11   Diffusion lens
13   Sample measuring section
14   Spectroscope
15   Sample supplying section
16   Sample discharging section
17   Discharge valve
20   Amplifier
21   A/D converter
22   Arithmetic operation unit
23   Display
24   Diffraction grating
25   Light receiving section

**Claims**

1.  A calculation method for absorbance in a spectroscopic analysis apparatus **characterized by**:

    irradiating a light including a plurality of wavelengths onto an object to be measured;
    receiving a reflected light or a transmitted light from the object to be measured;
    determining absorbances at a plurality of wavelengths on the basis of information obtained by receiving the light;
    determining a second- or higher-order regression formula with the wavelengths of the light as explanatory variables and the absorbances as objective variables by use of the plurality of absorbances;
    and calculating absorbance at a specified wavelength by substituting a value of the specified wavelength for the regression formula.

2.  A calculation method particularly according to claim 1, for derivative absorbance in the spectroscopic analysis apparatus **characterized by**;
    differentiating a regression formula particularly according to claim 1;
    and calculating derivative absorbance at a specified wavelength by substituting a value of the specified wavelength for the differentiated regression formula.

3.  A machinery difference correction method of a spectroscopic analysis apparatus **characterized by**;
    among a plurality of spectroscopic analysis apparatuses which have the same structure or which are the same products;
    setting at least one of the spectroscopic analysis apparatuses as a standard device;
    determining absorbances at a plurality of specified wavelengths in a calculation method particularly according to claim 1 by the standard device;
    preparing a calibration curve by use of the absorbances;
    and when the calibration curve is installed in one of the spectroscopic analysis apparatuses other than the standard device, and at the time of calculating a specified component of an object to be measured with the calibration curve on the basis of information on the absorbances measured to obtain by the other spectroscopic analysis apparatus, determining absorbances at the specified wavelengths in a calculation method for absorbance particularly according to claim 1 by the other spectroscopic analysis apparatus as well, to use the absorbances.

4. A machinery difference correction method of a spectroscopic analysis apparatus, particularly according to claim 3, **characterized by**;

among a plurality of spectroscopic analysis apparatuses which have the same structure or which are the same products;

setting at least one of the spectroscopic analysis apparatuses as a standard device;

determining derivative absorbances at a plurality of specified wavelengths in a calculation method particularly according to claim 2 by the standard device;

preparing a calibration curve by use of the derivative absorbances;

and when the calibration curve is installed in one of the spectroscopic analysis apparatuses other than the standard device, and at the time of calculating a specified component of an object to be measured with the calibration curve on the basis of information on the derivative absorbances measured to be obtained by the other spectroscopic analysis apparatus,

determining derivative absorbances at the specified wavelengths in the calculation method for derivative absorbance according to claim 2 by the other spectroscopic analysis apparatus as well, to use the derivative absorbances.

Fig.1

Fig.2

Approximation formula of absorbances in spectroscope 14

Fig.3

Prediction // Spectroscopic analysis apparatus 6B (Calibration curve A)

R : 0. 9 5 9
SEP : 0. 6 3 1
BIAS : 0. 5 8 9
MCSEP : 0. 2 0 6

Calculated value of protein content ratio (%)

Chemical analytical value of protein content ratio (%)

Fig.4

Prediction // Spectroscopic analysis apparatus 6B (Calibration curve B)

R     : 0. 9 7 2
S E P : 0. 4 9 3
B I A S : − 0. 4 5 9
M C S E P : 0. 1 6 8

Calculated value of protein content ratio (%)

Chemical analytical value of protein content ratio (%)

Europäisches
Patentamt

European
Patent Office

Office européen
des brevets

**EUROPEAN SEARCH REPORT**

Application Number

EP 10 00 0546

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 418 417 A2 (SPECTROMEDICAL INC [CA]) 12 May 2004 (2004-05-12) * paragraphs [0015] - [0050] * * paragraphs [0073] - [0079] * * paragraphs [0125], [0126] * * paragraphs [0165] - [0181] * | 1-4 | INV. G01N21/27 G01N23/06 G01N33/02 |
| X | US 5 243 546 A (MAGGARD STEVEN M [US]) 7 September 1993 (1993-09-07) * examples 1-4 * | 1-4 | |
| X | BOUVERESSE E ET AL: "CALIBRATION TRANSFER ACROSS NEAR-INFRARED SPECTROMETIC INSTRUMENTS USING SHENK'S ALGORITHM: EFFECTS OF DIFFERENT STANDARDISATION SAMPLES" ANALYTICA CHIMICA ACTA, ELSEVIER, AMSTERDAM, NL LNKD- DOI:10.1016/0003-2670(94)00237-1, vol. 297, no. 3, 10 November 1994 (1994-11-10), pages 405-416, XP008000829 ISSN: 0003-2670 * the whole document * | 1-4 | |
| A | US 5 459 677 A (KOWALSKI BRUCE R [US] ET AL) 17 October 1995 (1995-10-17) * column 1, line 50 - column 4, line 34 * | 1-4 | |

-/--

TECHNICAL FIELDS
SEARCHED (IPC)

G01N

The present search report has been drawn up for all claims

| Place of search | Date of completion of the search | Examiner |
|---|---|---|
| Munich | 26 April 2010 | Consalvo, Daniela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Application Number

EP 10 00 0546

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | OZDEMIR D ET AL: "EFFECT OF WAVELENGTH DRIFT ON SINGLE- AND MULTI-INSTRUMENT CALIBRATION USING GENETIC REGRESSION" APPLIED SPECTROSCOPY, THE SOCIETY FOR APPLIED SPECTROSCOPY. BALTIMORE, US LNKD-DOI:10.1366/0003702981945020, vol. 52, no. 9, 1 September 1998 (1998-09-01), pages 1203-1209, XP000779129 ISSN: 0003-7028 * the whole document * | 1-4 | |

TECHNICAL FIELDS SEARCHED (IPC)

The present search report has been drawn up for all claims

| Place of search | Date of completion of the search | Examiner |
|---|---|---|
| Munich | 26 April 2010 | Consalvo, Daniela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 00 0546

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2010

| Patent document cited in search report | | Publication date | Patent family member(s) | | Publication date |
|---|---|---|---|---|---|
| EP 1418417 | A2 | 12-05-2004 | JP | 4247067 B2 | 02-04-2009 |
| | | | JP | 2004264279 A | 24-09-2004 |
| | | | JP | 2007127661 A | 24-05-2007 |
| US 5243546 | A | 07-09-1993 | NONE | | |
| US 5459677 | A | 17-10-1995 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5060688 A

**Non-patent literature cited in the description**

- Near-Infrared Spectral Analysis. *Japanese Society for Food Science and Technology - Abstract of Speech from the 18th Symposium on Non-Destructive Evaluation Techniques,* 2002, 21